(19) Europäisches Patentamt / European Patent Office / Office européen des brevets

(11) **EP 4 006 683 B1**

(12) **EUROPEAN PATENT SPECIFICATION**

(45) Date of publication and mention
of the grant of the patent:
**25.12.2024 Bulletin 2024/52**

(21) Application number: **20846707.6**

(22) Date of filing: **24.07.2020**

(51) International Patent Classification (IPC):
**G01P 5/02** (2006.01)    **G05D 1/00** (2024.01)
**B64U 101/00** (2023.01)

(52) Cooperative Patent Classification (CPC):
**G01P 5/02; G05D 1/0204; B64U 10/13;
B64U 2101/00**

(86) International application number:
**PCT/CN2020/104585**

(87) International publication number:
**WO 2021/018050 (04.02.2021 Gazette 2021/05)**

(54) **WIND SPEED MEASUREMENT AND CALCULATION METHOD, WIND SPEED ESTIMATOR, AND UNMANNED AERIAL VEHICLE**

**WINDGESCHWINDIGKEITSMESS- UND -BERECHNUNGSVERFAHREN, WINDGESCHWINDIGKEITSSCHÄTZER UND UNBEMANNTES LUFTFAHRZEUG**

PROCÉDÉ DE MESURE ET DE CALCUL DE LA VITESSE DU VENT, ESTIMATEUR DE VITESSE DU VENT ET ENGIN VOLANT SANS PILOTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.07.2019 CN 201910682355**

(43) Date of publication of application:
**01.06.2022 Bulletin 2022/22**

(73) Proprietor: **Autel Robotics Co., Ltd.
Shenzhen, Guangdong 518055 (CN)**

(72) Inventor: **ZHANG, Tianbao
Shenzhen, Guangdong 518055 (CN)**

(74) Representative: **Gulde & Partner
Patent- und Rechtsanwaltskanzlei mbB
Wallstraße 58/59
10179 Berlin (DE)**

(56) References cited:
**EP-A2- 2 390 670        WO-A1-2016/037035
WO-A1-2019/061083        WO-A1-2019/061083**

**CN-A- 104 346 522        CN-A- 109 374 924
CN-A- 110 427 047        JP-A- 2019 095 219
US-A1- 2011 295 569**

- **JIA-YING WANG ET AL: "A Wind Estimation Method with an Unmanned Rotorcraft for Environmental Monitoring Tasks", SENSORS, vol. 18, no. 12, 19 December 2018 (2018-12-19), pages 4504, XP055680174, DOI: 10.3390/s18124504**
- **BENDERS SEBASTIAN ET AL: "Adaptive Path Planning for Unmanned Aircraft Using Inflight Wind Velocity Estimation", 2018 INTERNATIONAL CONFERENCE ON UNMANNED AIRCRAFT SYSTEMS (ICUAS), IEEE, 12 June 2018 (2018-06-12), pages 483 - 492, XP033396653, DOI: 10.1109/ICUAS.2018.8453341**
- **T.G. NOH, T.J. KO, K.S. LEE, J.Y. LEE, Y.L. KIM: "3GPP LTE  LTE-Advanced  Standardization of 3GPP LTE and LTE-Advanced", 23 August 2008 (2008-08-23), pages 1 - 9, XP055777143, [retrieved on 20210217], DOI: 10.22648/ETRI.2008.J.230301**

**Description**

## TECHNICAL FIELD

The present application relates to the technical field of unmanned aerial vehicles (UAV), and in particular, to a wind velocity measurement method, a wind velocity estimator, and a UAV

## BACKGROUND

An unmanned aerial vehicle (UAV) is a hovering aerial vehicle having strong adaptability and low costs and fast and convenient in launching, which is used in many different occasions. The UAV may carry different types of functional assemblies to play an important role.

The UAV is interfered by wind during a flight. When a wind velocity or wind is small, the robustness of a flight control system can resist interference of the wind and ensure a smooth flight of the UAV However, the flight control system can adjust or resist wind of only a specified limited range.

When the wind velocity exceeds a bearing upper limit of the UAV, stability of the flight control system cannot be maintained. As a result, the UAV may fail to come back or even explode. When the wind velocity is high, the aerial photography quality of the UAV is severely affected.

Therefore, wind velocity detection is a vital function, warning can be effectively provided for a UAV user based on the UAV wind velocity detection and estimation, thereby effectively avoiding accidents.

Current wind velocity detection or estimation methods generally includes directly measuring an air velocity by using a wind velocity sensor and estimating a wind velocity by establishing a database in advance or based on big data. However, directly measuring the airflow velocity by using a wind velocity sensor or a wind sensor requires an additional sensor on the UAV, resulting in higher UAV production costs. Establishing a database or big data calculation requires more computing power consumption, increasing a computational burden of the flight control system. Moreover, the database loaded on the UAV occupies much memory and consumes a lot of time, affecting real-time performance of the wind velocity detection.

Therefore, a new low-cost wind velocity detection manner is urgently required. The relevant prior arts are described as follows:

An article document is entitled "Wind Estimation Method with an Unmanned Rotorcraft for Environmental Monitoring Tasks" Sensors, vol. 18, no.12, 19 December 2018, page 4504, XP055680174, DOI: 10.3390/s18124504 , which disclosed wind velocity (strength and direction) that is an important parameter for UAV-based environmental monitoring tasks.

The patent application (EP 2 390 670A2) is entitled "Wind estimation for an unmanned aerial vehicle", which disclosed a speed of the wind during operation of a UAV is estimated. In one example the speed of the wind is estimated by modeling an acceleration of an unmanned aerial vehicle (UAV) based on a measured ground speed of the UAV, determining an actual acceleration of the UAV with one or more sensors, and estimating the speed of the wind as an integral of a difference between the modeled acceleration and the actual acceleration.

An article document is entitled "Adaptive Path Planning for Unmanned Aircraft Using Inflight Wind Velocity Estimation" 2018 INTERNATIONAL CONFERENCE ON UNMANNED AIRCRAFT SYSTEMS (ICUAS), IEEE, 12 June 2018, pages 483-492, XP033396653, DOI: 10.1109/ICUAS.2018.8453341 [retrieved on 2018-08-31], which disclosed using a wind velocity estimation to estimate steady and turbulent wind using a basic set of small unmanned aircraft on-board sensors. The path planning algorithm considers the aircraft's kinematics, flight envelope and wind estimate.

The patent application (WO 2019/061083 A1) is entitled "System and Method for Determining Airspeed", which disclosed a method of determining airspeed of a movable object includes a calibration process to determine a relationship between forces exerted on the movable object and airspeed of the movable object. Forces exerted on the movable object while the movable object is moving are determined, and the airspeed of the movable object is determined based on the determined forces and the relationship.

## SUMMARY

In order to resolve the above technical problems, embodiments of the present invention provide a wind velocity measurement method and an unmanned aerial vehicle (UAV) that do not rely on a database and a newly added wind velocity sensor.

In order to resolve the above technical problems, an embodiment of the present invention provides a wind velocity measurement method. The wind velocity measurement method includes:

determining current wind resistance interference of a UAV by means of system identification based on flight data and attribute data of the UAV, where the flight data includes an attitude angle, a flight velocity, an acceleration and a flight altitude of the UAV, and

the attribute data includes a mass of the UAV, an inherent wind resistance coefficient and a nonlinear function used to calculate a windward area, wherein the windward area is calculated by using the nonlinear function related to a current attitude angle of the UAV; and

calculating a wind velocity of a flight environment of the UAV according to the wind resistance interference and the inherent wind resistance of the UAV.

Optionally, the determining current wind resistance interference of a UAV by means of system identification based on flight data and attribute data of the UAV includes:

constructing a system identification model of the UAV, wherein a to-be-identified parameter of the system identification model is a current equivalent wind resistance coefficient of the UAV; and

solving the corresponding equivalent wind resistance coefficient according to current flight data and the attribute data of the UAV by using an online identification method.

The calculating a wind velocity of a flight environment of the UAV according to the wind resistance interference and the inherent wind resistance of the UAV includes:

calculating the wind velocity of the flight environment of the UAV according to a difference between the equivalent wind resistance coefficient and the inherent wind resistance coefficient of the UAV.

Optionally, the solving the equivalent wind resistance coefficient corresponding to current flight data and the attribute data of the UAV by using an online identification method includes:

discretizing the system identification model to form a corresponding discrete equation;

recursively calculating an equivalent wind resistance of the UAV according to a preset initial value, a current attitude angle, a current flight velocity and a current acceleration of the UAV; and

converting the equivalent wind resistance to an equivalent wind resistance coefficient according to a current windward area of the UAV and an air density.

The windward area is calculated by using the current attitude angle of the UAV and the nonlinear function used to calculate the windward area. The air density is calculated by using a current flight altitude of the UAV.

Optionally, the equivalent wind resistance coefficient is represented by an equivalent wind resistance coefficient component in a direction x and an equivalent wind resistance coefficient component in a direction y. The wind velocity is represented by a wind velocity component in the direction x and a wind velocity component in the direction y. the direction x and the direction y are perpendicular to each other and are on a same plane as the UAV.

Optionally, the calculating a wind velocity of a flight environment of the UAV according to the wind resistance interference and the inherent wind resistance of the UAV specifically includes:

calculating the wind velocity of the flight environment of the UAV by using the following formula:

$$\begin{cases} V_{wx} = (C_x - C_{dx})0.5\rho V_x^2 S_{fb} \\ V_{wy} = (C_y - C_{dy})0.5\rho V_y^2 S_{rl} \end{cases}.$$

$V_{wx}$ is a wind velocity component of the wind velocity of the flight environment of the UAV in the direction x. $V_{wy}$ is a wind velocity component of the wind velocity of the flight environment of the UAV in the direction y. $V_x$ is a velocity of the UAV in the direction x, $V_y$ is a velocity of the UAV in the direction y. $P$ is an air density at a flight altitude. $S_{fb}$ is a windward area of the UAV during a flight in the direction x. $S_{rl}$ is a windward area of the UAV during a flight in the direction y. $C_x$ is an equivalent wind resistance coefficient component in the direction x. $C_y$ is an equivalent wind resistance coefficient component in the direction y. $C_{dx}$ is an inherent wind resistance coefficient of the UAV in the direction x. $C_{dy}$ is an inherent wind resistance coefficient of the UAV in the direction y.

Optionally, the inherent wind resistance coefficient of the UAV in the direction x and the inherent wind resistance coefficient in the direction y are determined by means of least square fitting according to flight data of the UAV in a windless room.

Optionally, the system identification model is represented by using the following formula:

$$\begin{cases} \dot{V}_x = \dfrac{1}{m}(-T\sin\theta - C_x \cdot 0.5\rho V_x^2 S_{fb} + w_x) \\ \dot{V}_y = \dfrac{1}{m}(T\sin\phi\cos\theta - C_y \cdot 0.5\rho V_y^2 S_{rl} + w_y) \end{cases}$$

$\dot{V}_x$ is an acceleration of the UAV in the direction x. $\dot{V}_y$ is an acceleration of the UAV in the direction y. $V_x$ is a velocity of the UAV in the direction x. $V_y$ is a velocity of the UAV in the direction y.

T is propeller tension. $\theta$ is a pitch angle. $\phi$ is a roll angle. $\rho$ is an air density at a flight altitude. $S_{fb}$ is a windward area of the UAV during a flight in the direction x. $S_{rl}$ is a windward area of the UAV during a flight in the direction y. $C_x$ is the equivalent wind resistance coefficient component in the direction x. $C_y$ is the equivalent wind resistance coefficient component in the direction y. m is the mass of the UAV. $w_x$ is a model uncertainty in the direction x. $w_y$ is a model uncertainty in the direction y.

Optionally, the windward area is calculated by using the following formula:

$$S_{fb} = S_{fb0}(1 + f_{fb}(\theta,\phi))$$

$$S_{rl} = S_{rl0}(1 + f_{rl}(\theta,\phi))$$

$S_{fb}$ is a windward area of the UAV during a flight in the direction x. $S_{rl}$ is a windward area of the UAV during a flight in the direction y. $S_{fb0}$ is a windward area of the UAV during the flight in the direction x at an attitude angle of 0. $S_{rl0}$ is a windward area of the UAV during the flight in the direction y at an attitude angle of 0. $f_{fb}(\theta,\phi)$ and $f_{rl}(\theta,\phi)$ are nonlinear functions. $\theta$ is a pitch angle. $\phi$ is a roll angle.

Optionally, the propeller tension is calculated by using the following formula:

$$T = -m\left(a_z + \frac{g}{\cos\theta\cos\phi}\right)$$

$a_z$ is an acceleration of the UAV in a direction z. $g$ is an acceleration of gravity. The direction z is perpendicular to a plane formed by the direction x and the direction y. $\theta$ is a pitch angle. $\phi$ is a roll angle, m is a mass of the UAV.

Optionally, the method further includes:

calculating the wind direction according to the wind velocity components in the direction x and the direction y by using the following formula:

$$\beta = \psi + \arctan2(-V_{wx}, -V_{wy}).$$

$\psi$ is a yaw angle of the UAV. $\beta$ is the wind direction. $V_{wx}$ is the wind velocity component in the direction x. $V_{wy}$ is the wind velocity component in the direction y.

Optionally, the method further includes: sending a warning signal when the wind velocity of the flight environment of the UAV satisfies a preset warning condition.

Optionally, the sending a warning signal when the wind velocity of the flight environment of the UAV satisfies a preset warning condition includes:

determining whether the preset warning condition is satisfied by means of calculation by using the following formula:

$$\sqrt{V_{wx}^2 + V_{wy}^2} \geq V_{thr}$$

where $V_{wx}$ is the wind velocity component in the direction x, $V_{wy}$ is the wind velocity component in the direction y, and $V_{thr}$ is a safe wind velocity threshold;
sending the warning signal when the preset warning condition is satisfied; and
keeping detecting the wind velocity of the flight environment of the UAV when the preset warning condition is not satisfied.

An example, that is not part of the claimed invention, provides a wind velocity estimator. The wind velocity estimator includes:

a system identification unit, configured to receive flight data and attribute data of a UAV, and identify and determine current wind resistance interference of the UAV according to the flight data and attribute data, where
the flight data includes an attitude angle, a flight velocity, an acceleration and a flight altitude of the UAV, and the attribute data includes a mass of the UAV, an inherent wind resistance coefficient and a nonlinear function used to calculate a windward area; and
a wind velocity estimation unit, connected to the system identification unit and configured to calculate a wind velocity of a flight environment of the UAV according to the wind resistance interference and the inherent wind resistance of the UAV.

Optionally, a preset system identification model is stored in the system identification unit. A to-be-identified parameter of the system identification model is a current equivalent wind resistance coefficient of the UAV.
The system identification unit is configured to solve the corresponding equivalent wind resistance coefficient according to current flight data and the attribute data of the UAV by using an online identification method.
Optionally, the system identification unit is further configured to:

discretize the system identification model to form a corresponding discrete equation;
recursively calculate an equivalent wind resistance of the UAV according to a preset initial value, a current attitude angle, a current flight velocity and a current acceleration of the UAV; and
convert the equivalent wind resistance to an equivalent wind resistance coefficient according to a current windward area of the UAV and an air density.

The windward area is calculated by using the current attitude angle of the UAV and the nonlinear function used to calculate the windward area. The air density is calculated by using a current flight altitude of the UAV.
Optionally, the equivalent wind resistance coefficient is represented by an equivalent wind resistance coefficient component in a direction x and an equivalent wind resistance coefficient component in a direction y. The wind velocity is represented by a wind velocity component in the direction x and a wind velocity component in the direction y. the direction x and the direction y are perpendicular to each other and are on a same plane as the UAV.
Optionally, the system identification model is represented by using the following formula:

$$\begin{cases} \dot{V}_x = \dfrac{1}{m}(-T\sin\theta - C_x \cdot 0.5\rho V_x^2 S_{fb} + w_x) \\ \dot{V}_y = \dfrac{1}{m}(T\sin\phi\cos\theta - C_y \cdot 0.5\rho V_y^2 S_{rl} + w_y) \end{cases}.$$

$\dot{V}_x$ is an acceleration of the UAV in the direction x. $\dot{V}_y$ is an acceleration of the UAV in the direction y. $V_x$ is a velocity of the UAV in the direction x. $V_y$ is a velocity of the UAV in the direction y.
T is propeller tension. $\theta$ is a pitch angle. $\phi$ is a roll angle. $\rho$ is an air density at a flight altitude. $S_{fb}$ is a windward area of the UAV during a flight in the direction x. $S_{rl}$ is a windward area of the UAV during a flight in the direction y. $C_x$ is the equivalent wind resistance coefficient component in the direction x. $C_y$ is the equivalent wind resistance coefficient component in the direction y. m is the mass of the UAV. $w_x$ is a model uncertainty in the direction x. $w_y$ is a model uncertainty in the direction y.
Optionally, the wind velocity estimation unit is further configured to receive a current attitude angle, a current flight velocity, a current flight altitude and an inherent wind resistance coefficient of the UAV and a nonlinear function used to calculate the windward area. The wind velocity of the flight environment of the UAV is calculated by using the following formula:

$$\begin{cases} V_{wx} = (C_x - C_{dx})0.5\rho V_x^2 S_{fb} \\ V_{wy} = (C_y - C_{dy})0.5\rho V_y^2 S_{rl} \end{cases}.$$

$V_{wx}$ is a wind velocity component of the wind velocity of the flight environment of the UAV in the direction x. $V_{wy}$ is a wind velocity component of the wind velocity of the flight environment of the UAV in the direction y. $V_x$ is a velocity of the UAV in the direction x, $V_y$ is a velocity of the UAV in the direction y. $P$ is an air density at a flight altitude. $S_{fb}$ is a windward area of the UAV during a flight in the direction x. $S_{rl}$ is a windward area of the UAV during a flight in the direction y. $C_x$ is an equivalent wind resistance coefficient component in the direction x. $C_y$ is an equivalent wind resistance coefficient component in the direction y. $C_{dx}$ is an inherent wind resistance coefficient of the UAV in the direction x. $C_{dy}$ is an inherent wind resistance coefficient of the UAV in the direction y.

Optionally, the wind velocity estimator further includes a warning unit.

The warning unit is configured to send a warning signal when the wind velocity of the flight environment of the UAV satisfies a preset warning condition.

Optionally, the warning unit is further configured to:

determine whether the preset warning condition is satisfied by means of calculation by using the following formula:

$$\sqrt{V_{wx}^2 + V_{wy}^2} \geq V_{thr}$$

where $V_{wx}$ is the wind velocity component in the direction x, $V_{wy}$ is the wind velocity component in the direction y, and $V_{thr}$ is a safe wind velocity threshold;
send the warning signal when the preset warning condition is satisfied; and
keep detecting the wind velocity of the flight environment of the UAV when the preset warning condition is not satisfied.

Still another embodiment of the present invention provides a UAV. The UAV includes a fuselage body and a plurality of sensors, a memory and a flight control system disposed on the fuselage body. A computer executable program instruction is stored in the memory. The computer executable program instruction, when called by the flight control system, causes the flight control system to acquire flight data from the sensors, acquire attribute data from the memory, and perform the wind velocity measurement method described above.

Optionally, the flight control system is further configured to convert a wind velocity of a flight environment of the UAV to a wind direction, and display the wind velocity and the wind direction on a remote control device corresponding to the UAV.

Compared with the prior art, the wind velocity measurement method provided in the embodiments of the present invention realizes the wind velocity measurement by identifying parameters based on the principle of system identification without a newly added wind velocity sensor and an external database. Therefore, not only hardware device costs are saved, but also an additional computing burden and a problem about real-time problem performance are avoided. The method is simple and requires low costs.

Further, a wind velocity calculation result may be applied to the warning function, to provide a prompt or an alarm to a user. In this way, the probability of flight accidents is effectively reduced.

## BRIEF DESCRIPTION OF THE DRAWINGS

One or more embodiments are exemplarily described with reference to the corresponding figures in the accompanying drawings, and the descriptions are not to be construed as limiting the embodiments. Components in the accompanying drawings that have same reference numerals are represented as similar components, and unless otherwise particularly stated, the figures in the accompanying drawings are not drawn to scale.

FIG. 1 is a schematic diagram of an application environment according to an embodiment of the present invention.
FIG. 2 is a functional block diagram of an unmanned aerial vehicle (UAV) according to an embodiment of the present invention.
FIG. 3 is a schematic diagram of a display interface of a remote controller (RC) according to an embodiment of the present invention.
FIG. 4 is a schematic diagram of a display interface of a smart terminal according to an embodiment of the disclosure.
FIG. 5 is a functional block diagram of a wind velocity estimator according to an example, that is not part of the claimed invention.
FIG. 6 is a method flowchart of a wind velocity measurement method according to an embodiment of the present invention.
FIG. 7 is a method flowchart of a recursive calculation method for identifying a parameter according to an embodiment of the present invention.
FIG. 8 is a method flowchart of a wind velocity measurement method according to another embodiment of the present invention.

FIG. 9 is a method flowchart of a calculation process executed by a flight control system according to an embodiment of the present invention.

FIG. 10 is a graph showing changes of a wind velocity with time according to an embodiment of the present invention.

FIG. 11 is a graph of changes of a wind direction with time according to an embodiment of the present invention.

## DETAILED DESCRIPTION

For ease of understanding the present invention, the present invention is described in more detail below with reference to the accompanying drawings and specific embodiments. It should be noted that, when a component is expressed as "being fixed to" another component, the component may be directly on the another component, or one or more intermediate components may exist between the component and the another component. When one component is expressed as "being connected to" another component, the component may be directly connected to another component, or one or more intermediate components may exist between the component and the another component. In the description of this specification, orientation or position relationships indicated by the terms such as "up", "down", "inside", "outside" and "bottom" are based on orientation or position relationships shown in the accompanying drawings, and are used only for ease and brevity of illustration and description of the present invention, rather than indicating or implying that the mentioned apparatus or component must have a particular orientation or must be constructed and operated in a particular orientation. Therefore, such terms should not be construed as limiting of the present invention. In addition, terms such as "first", "second" and "third" are used only for description purpose and shall not be construed as indicating or implying relative importance.

Unless otherwise defined, meanings of all technical and scientific terms used in the specification are the same as that usually understood by a person skilled in the technical field to which the present invention belongs. Terms used in the specification of the present invention are merely intended to describe objectives of the specific embodiments, and are not intended to limit the present invention. A term "and/or" used in this specification includes any or all combinations of one or more related listed items.

In addition, technical features involved in different embodiments of the present invention described below may be combined together if there is no conflict.

System identification is a system control method. The system identification determines and describes a data model of a system behavior based on an input and output time function of a system, so as to predict the system behavior. During system identification, a specific data model is determined according to the priori knowledge and a parameter identification process. External interference of the entire system can be estimated by using some calculated to-be-identified parameters, and required parameters can be obtained by using a series of suitable conversion methods. The external interference may be interference to a motion system, for example, impact on a (unmanned aerial vehicle) UAV caused by wind interference during a flight of the UAV.

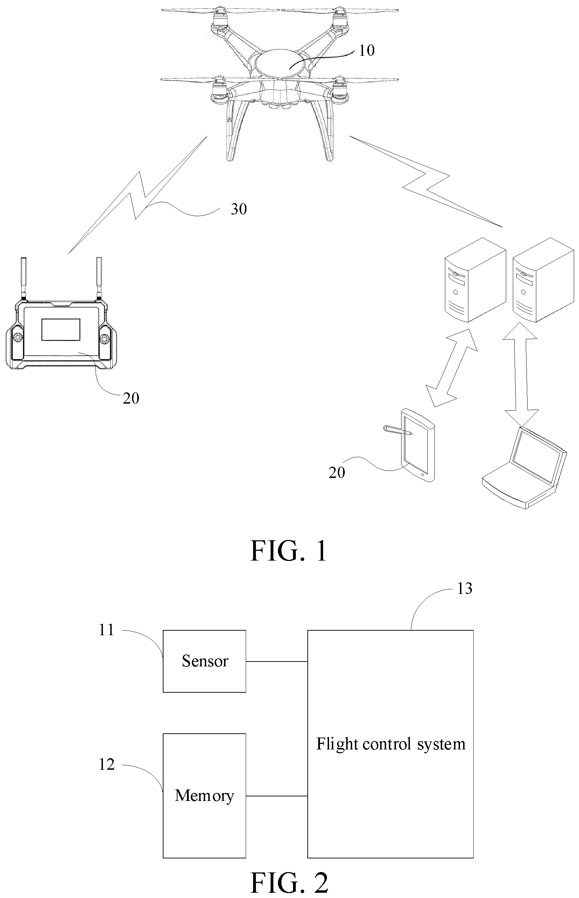

FIG. 1 is an application environment according to an embodiment of the present invention. As shown in FIG. 1, for example, the application environment is a UAV system. The system includes a UAV 10, a remote control device 20 and a wireless network 30.

The UAV 10 may be a UAV driven by any type of power (such as electricity). The UAV includes but is not limited to a four-axis UAV, a fixed-wing aircraft and a helicopter model. In this embodiment, a four-axis UAV is used as an example for description. A fuselage body of the UAV 10 may carry a plurality of different functional modules. The functional modules may be software modules, hardware modules, or a combination of software and hardware, and are configured to implement a modular device for one or more functions.

The remote control device 20 may be of any type, such as an RC, and is configured to establish a communicative connection to the UAV to control an apparatus of the UAV. The RC may be equipped with one or more different user interaction apparatuses. Based on the user interaction apparatuses, user instructions are collected or information is displayed and fed back to a user to realize interaction between the user and the UAV.

The interaction apparatuses include but are not limited to a button, a roller, a display screen, a touch screen, a mouse, a speaker and a joystick. For example, the remote control device 20 may be equipped with a display screen. The display screen receives a remote control instruction of a user for the UAV and displays an aerial image to the user, or presents a corresponding simulated pilot interface to the user. One or more flight parameters, such as a flight velocity, a heading or a remaining batter level are displayed on the simulated pilot interface.

In other embodiments, the remote control device 20 may be implemented by a smart terminal. The smart terminal includes but is not limited to a smart phone, a tablet computer, a laptop computer, and a wearable device. The smart terminal establishes a communicative connection to the UAV by running a specially configured APP client or web page to realize a data transmission and reception with the UAV. In this way, the smart terminal is used as the remote control device 20.

The wireless network 30 may be a wireless communication network configured to establish a data transmission channel between two nodes based on any type of data transmission principle. For example, the wireless network may be a Bluetooth network, a Wi-Fi network, a wireless cellular network, or a combination thereof located in a different signal frequency band. A specific frequency band or network form of the wireless network 30 is related to a communication device used for the UAV 10 and the remote control device 20.

FIG. 2 is a functional block diagram of the UAV 10 according to an embodiment of the present invention. In some embodiments, as shown in FIG. 2, in order to achieve most fundamental flight requirements of the UAV 10, the functional modules carried on the UAV 10 include a plurality of sensors 11, a memory 12 and a flight control system 13.

The sensors 11 are disposed in the fuselage body and are configured to detect motion status parameters of the UAV during a flight. For example, the sensors are six-axis gyroscopes or accelerometers. The sensors 11 are fundamental sensors required for design and manufacture of the UAV 10. The sensors are configured to monitor a current motion status of the UAV 10 to effectively control the flight of the UAV 10.

The memory 12 is a non-volatile computer-readable storage medium, such as at least one magnetic disk storage device, a flash memory device or other non-volatile solid-state storage devices. The memory has a program storage area and a data storage area respectively configured to store corresponding data information, for example, a non-volatile software program, a non-volatile computer executable program and a module stored in the program storage area, or a calculation result and captured image information stored in the data storage area.

The flight control system 13 is a core for control of the flight of the UAV. Specifically, the flight control system may use any type of processor. The flight control system is used as a core of logic processing and calculation. The flight control system 13 is configured to acquire data, perform a logical calculation function, deliver a calculation result, and change a flight state of the UAV 10 according to a user instruction, to ensure that the UAV 10 is in a safe and controllable flight state.

On the one hand, the flight control system 13 may acquire one or more types of collected data from the sensors 11, and analyze and determine a plurality of pieces of data related to the UAV (such as an attitude angle, an acceleration and a flight velocity) by using a set data fusion or analysis method as a basis for controlling the motion status of the UAV. On the other hand, the flight control system 13 is further connected to the memory 12. A corresponding software program or computer executable program is called from the memory 12 to perform corresponding logical calculation function, so as to perform corresponding calculation and determination.

For example, in order to realize wind velocity warning, during the flight of the UAV, the flight control system 13 may read the data information related to the UAV, estimate current wind interference to the UAV based on the principle of system identification, and output a corresponding estimates wind velocity value. Then the flight control system compares the outputted estimated wind velocity value with a preset warning condition to determine whether a warning signal currently needs to be triggered.

After the warning signal is triggered, the UAV 10 feeds back the warning signal to the remote control device 20 by using the wireless network 30. After receiving the warning signal, the remote control device 20 may display corresponding warning information by using the interaction apparatuses to prompt an operator to pay attention to flight safety and land the UAV at a suitable place in time.

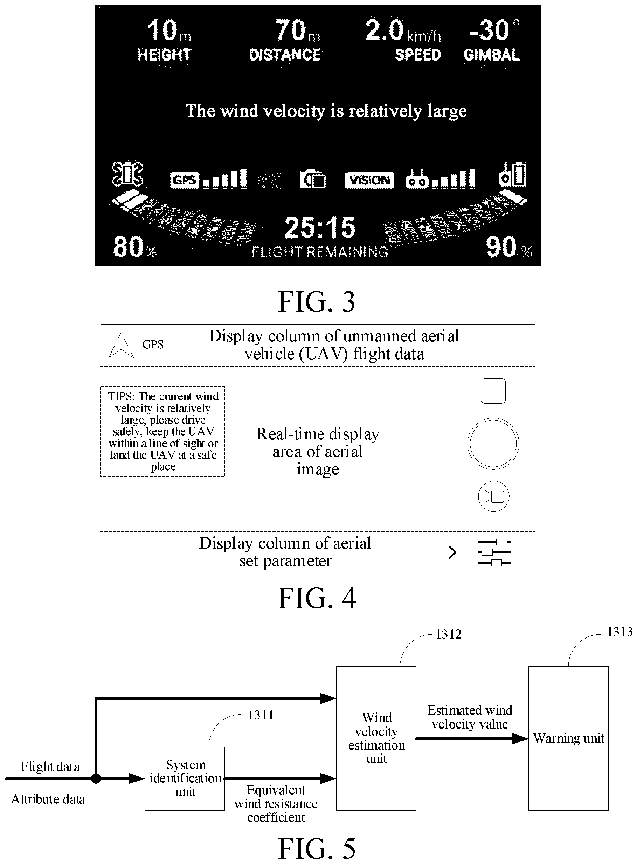

For example, when the remote control device 20 is an RC, a display interface shown in FIG. 3 may be used to prompt "Large wind velocity" to the user at a center of a simulated pilot interface. When the remote control device 20 is a smart terminal, as shown in FIG. 4, prompt information (tips) may be displayed in a partial area of a display screen of the smart terminal. Alternatively, a special warning tone is played by using a speaker of the remote control device 20 to warn that the current wind velocity is excessively large.

In other embodiments, the flight control system 13 may further convert the wind velocity of the flight environment of the UAV provided by the wind velocity estimator to wind direction data and provide the wind direction data to the remote control device 20. An interaction device such as the display screen of the remote control device 20 may display the wind velocity and the wind direction. In this way, the operator can learn a current wind status in the flight airspace in time.

In the application environment shown in FIG. 1, only the applications of wind velocity observation and warning on the UAV system are shown. Those skilled in the art can understand that the functional module that realizes the wind velocity observation and the warning may be carried on other types of mobile vehicles (such as a remote control vehicle). Data information related to the mobile vehicle is received, and interference to motion of the mobile vehicle is calculated, to realize the warning same as or similar to the above. The inventive idea disclosed in the embodiments of the present invention is not limited to being applied to the UAV system shown in FIG. 1.

Based on the inventive idea of calculating the wind interference in the flight environment of the UAV by using the wind velocity estimator disclosed in the embodiments of the present invention, those skilled in the art easily think of adjusting, replacing or changing one or more of the steps and the parameters to construct other alternative models according to practical requirements or use scenarios of the UAV. The alternative models are all properly derived by those skilled in the art based on the present invention in consideration of different aspects of the UAV.

For example, the intensity of interference may be quantitatively observed by detecting changes in an attitude angle of the UAV during hovering. The amount of wind interference to the operation of the UAV may alternatively be determined based on the principle of force balance and the principle of interference observation, to estimate the wind velocity born by the UAV.

A process of calculating the wind velocity based on the principle of system identification is described below in detail. FIG. 5 is a functional block diagram of a wind velocity estimator according to an example, that is not part of the claimed invention. As shown in FIG. 5, the wind velocity estimator includes a system identification unit 1311 and a wind velocity estimation unit 1312.

The system identification unit 1311 is configured to receive flight data and attribute data of a UAV, and determine current wind resistance interference of the UAV by means of system identification. The system identification unit 1311 may be implemented by a processor (such as a flight control system) that can perform logical determination by calling a computer software program instruction related to the system identification pre-stored in a memory.

The flight data includes an attitude angle, a flight velocity, an acceleration and a flight altitude of the UAV. The attribute data includes a mass of the UAV, an inherent wind resistance coefficient and a nonlinear function used to calculate a windward area.

The system identification unit 1311 quantitatively determines interference to motion of the UAV by means of the system identification. Generally, main interference to the motion of the UAV is substantially considered to be from the wind in a flight airspace. Therefore, the interference may be equivalently considered as resistance caused by the wind, to calculate the wind resistance interference.

Specifically, the system identification unit 1311 uses a system identification model constructed by using some priori knowledge (such as a dynamic velocity change equation of the UAV). In the system identification model, a to-be-identified parameter may be an equivalent wind resistance coefficient.

The equivalent wind resistance coefficient is specifically a parameter related to the wind resistance interference. The equivalent wind resistance coefficient is used to represent a relationship between the UAV and the wind resistance of the UAV. That is to say, after the equivalent wind resistance coefficient is learned and a plurality of pieces of data related to an attribute (that is, the attribute data) and a motion status (that is, the flight data) of the UAV is acquired by using a sensor of the UAV, a current wind resistance can be calculated.

The wind velocity estimation unit 1312 is connected to the system identification unit 1311. The wind velocity estimation unit receives the wind resistance interference and calculates a wind velocity of a flight environment of the UAV according to changes in inherent wind resistance relative to the UAV. The specific wind velocity calculation process may be determined according to a form of inputted wind resistance interference. The specific wind velocity calculation process may be completed by using any conversion method.

The wind velocity estimation unit 1312 may be implemented by a processor (such as a flight control system) that can perform logical determination by calling a computer software program instruction related to wind velocity calculation pre-stored in a memory.

In some embodiments, in order to facilitate calculation and representation, two directions x and y perpendicular to each other may be constructed on a plane where the UAV is located. Equivalent wind resistance coefficient components and wind velocity components in the two directions may be calculated to complete the wind velocity estimation.

Specifically, based on the priori knowledge such as dynamic changes in the force and the velocity of the UAV, a system identification model shown in the following formula (1) may be constructed:

$$\begin{cases} \dot{V}_x = \dfrac{1}{m}(-T\sin\theta - C_x \cdot 0.5\rho V_x^2 S_{fb} + w_x) \\[2mm] \dot{V}_y = \dfrac{1}{m}(T\sin\phi\cos\theta - C_y \cdot 0.5\rho V_y^2 S_{rl} + w_y) \end{cases}$$

$$(1).$$

$\dot{V}_x$ is a velocity change rate (that is, acceleration) of the UAV in the direction x. $\dot{V}_y$ is a velocity change rate of the UAV in the direction y. $V_x$ is a velocity of the UAV in the direction x. $V_y$ is a velocity of the UAV in the direction y velocity. T is propeller tension. $\theta$ is a pitch angle. $\phi$ is a roll angle. $P$ is an air density at a flight altitude. $S_{fb}$ is a windward area of the UAV during a flight in the direction x. $S_{rl}$ is a windward area of the UAV during a flight in the direction y. $C_x$ is an equivalent wind resistance coefficient component in the direction x. $C_y$ is an equivalent wind resistance coefficient component in the direction y. m is a mass of a UAV. $w_x$ is a model uncertainty in the direction x. $w_y$ is a model uncertainty in the direction y.

A different altitude has a corresponding air density. The air density at the flight altitude of the UAV generally can be acquired by querying a table. Certainly, when the air density changes little, a fixed value may be directly used to ignore the slight change in the air density.

The model uncertainty is an adjustment part used to compensate for inconsistency between an established system model and an actual motion status. The model uncertainty is an empirical value or function, and may be determined and adjusted by using statistical methods such as experiment or data analysis.

The windward area is a parameter changing with the flight attitude of the UAV. In some embodiments, the windward area may be approximated as a nonlinear function related to the attitude angle. For example, the nonlinear function may be written as the following formulas (2) and (3):

$$S_{fb} = S_{fb0}(1 + f_{fb}(\theta, \phi)) \tag{2}$$

$$S_{rl} = S_{rl0}(1 + f_{rl}(\theta, \phi)) \tag{3}.$$

$S_{fb0}$ is a windward area of the UAV during the flight in the direction x at an attitude angle of 0. $S_{rl0}$ is a windward area of the UAV during the flight in the direction y at an attitude angle of 0.

The propeller tension is related to an output power of a motor, which is externally expressed as the acceleration of the UAV. Generally, a larger acceleration means larger propeller tension. In some embodiments, the propeller tension may be calculated by the following formula (4):

$$T = -m(a_z + \frac{g}{\cos\theta\cos\phi}) \tag{4}.$$

$a_z$ is an acceleration of the UAV in a direction z. $g$ is an acceleration of gravity. The direction z is perpendicular to a plane formed by the direction x and the direction y.

In the system identification model shown in the formula (1), based on an attitude angle, a flight velocity and an acceleration inputted and outputted by an entire UAV motion system, the system identification unit 1311 may complete the parameter identification and acquire the current equivalent wind resistance coefficient to reflect the wind resistance interference of the flight environment of the UAV.

Corresponding to the parameter identification, the inherent wind resistance of the UAV is expressed by an inherent wind resistance coefficient of the UAV. Specifically, the wind velocity estimation unit 1312 may calculate the wind velocity of the flight environment of the UAV by using the following formula (5):

$$\begin{cases} V_{wx} = (C_x - C_{dx})0.5\rho V_x^2 S_{fb} \\ V_{wy} = (C_y - C_{dy})0.5\rho V_y^2 S_{rl} \end{cases} \tag{5}$$

$V_{wx}$ is a wind velocity component of the wind velocity of the flight environment of the UAV in the direction x. $V_{wy}$ is a wind velocity component of the wind velocity of the flight environment of the UAV in the direction y. $V_x$ is a velocity of the UAV in the direction x, $V_y$ is a velocity of the UAV in the direction y. $P$ is an air density at a flight altitude. $S_{fb}$ is a windward area of the UAV during a flight in the direction x. $S_{rl}$ is a windward area of the UAV during a flight in the direction y. $C_x$ is an equivalent wind resistance coefficient component in the direction x. $C_y$ is an equivalent wind resistance coefficient component in the direction y. $C_{dx}$ is an inherent wind resistance coefficient of the UAV in the direction x. $C_{dy}$ is an inherent wind resistance coefficient of the UAV in the direction y.

The inherent wind resistance coefficient is a mathematical parameter determined when the UAV is in a windless environment according to a shape, a structure and the like of the UAV. Specifically, the inherent wind resistance coefficient may be determined by using a data statistics method such as a least square fitting according to a plurality of sets of experimental data collected during a windless indoor flight or a flight in other ideal experimental environments before delivery and sell of the UAV.

It should be noted that the above method for calculating the inherent wind resistance coefficient is an offline calculation process. The process may be completed in advance and stored in the memory of the UAV. The process is called by the wind velocity estimation unit 1312 without execution on each UAV.

According to the calculation formulas disclosed in the above embodiments, those skilled in the art can understand that when the system identification unit performs system identification to determine the current wind resistance interference of the UAV, required data information related to the UAV includes at least an attitude angle, a flight velocity, an acceleration, a flight altitude, a mass and an inherent wind resistance coefficient of the UAV and a nonlinear function used to calculate a windward area.

The attitude angle, the flight velocity, the acceleration and the flight altitude of the UAV are all parameters changing with the motion status of the UAV. The parameters may be acquired by means of data fusion or the like based on the sampling data collected by a series of basic sensors disposed on the UAV.

The mass and the inherent wind resistance coefficient of the UAV and the nonlinear function used to calculate the windward area are parameters depending on inherent attributes of the UAV. The parameters may be pre-determined by means of offline calculation through experiments and stored in the memory for calling.

Still referring to FIG. 5, in other embodiments, the wind velocity estimator may further include a warning unit 1313.

The warning unit 1313 is connected to the wind velocity estimation unit 1312. The warning unit is configured to receive a wind velocity of a current flight environment provided by the wind velocity estimation unit 1312 and send a warning signal to realize wind velocity warning when the wind velocity of the flight environment of the UAV satisfies a preset warning condition.

The warning unit 1313 may be implemented by a processor (such as a flight control system) that can perform logical determination by calling a computer software program instruction related to the preset warning condition pre-stored in a memory.

That is to say, the system identification unit, the wind velocity estimation unit and the warning unit all can be implemented by the flight control system in the embodiments of the present invention by calling computer software program instructions corresponding to the functions and the steps.

It should be noted that FIG. 5 describes in detail a structure of the wind velocity estimator provided in the examples by using a functional block diagram as an example. Those skilled in the art may selectively use software, hardware, or a combination of software and hardware to implement the function of the wind velocity estimator disclosed in the specification, the steps to be performed, the functions to be implemented and actual requirements (such as chip power consumption, heating restrictions, silicon chip costs or chip volumes). For example, using more software can reduce the chip costs and an occupied circuit area and facilitate modification. Using more hardware circuits can improve reliability and a calculation velocity.

Based on the structural framework of the wind velocity estimator shown in FIG. 5, an embodiment of the present invention further provides a complete wind velocity measurement method. Therefore, one or more specific steps in the embodiment of the wind velocity calculation method may be applied to the wind velocity estimator. The steps are implemented by corresponding functional modules. For brevity, the description is not repeated herein.

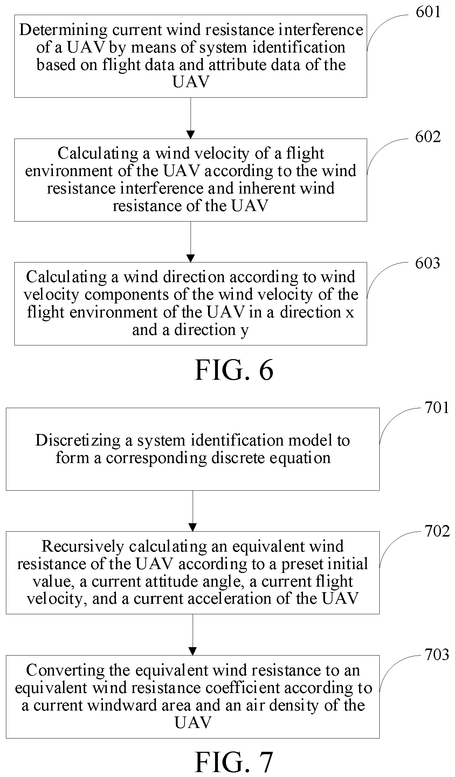

FIG. 6 is a method flowchart of a wind velocity measurement method according to an embodiment of the present invention. In this embodiment, the wind velocity measurement method may be performed by the UAV shown in FIG. 1 to acquire wind velocity information of a current flight environment of the UAV. Specifically, the wind velocity measurement method may be implemented by the flight control system shown in FIG. 2 by calling data information provided by a memory and a sensor.

As shown in FIG. 6, the method includes the following steps:

601: Determining current wind resistance interference of a UAV by means of system identification based on flight data and attribute data of the UAV.

By means of the system identification, interference to an entire motion system is estimated based on the changes in data inputted and outputted by the motion system of the UAV with time (which is all equivalent to wind resistance interference).

The flight data is data detected in real time and changing with a flight status of the UAV (for example, an attitude angle, a flight velocity, a flight altitude and an acceleration of the UAV). The attribute data is preset and depends on inherent attributes of the UAV (such as a mass and an inherent wind resistance coefficient of the UAV and a nonlinear function used to calculate a windward area are parameters).

602: Calculating a wind velocity of a flight environment of the UAV according to the wind resistance interference and the inherent wind resistance of the UAV.

It is understandable that the wind resistance interference estimated by means of the system identification is actually caused by constant resistance of the UAV in a windless condition and external wind in a flight airspace.

Therefore, the wind velocity of the current flight environment of the UAV may be determined by means of corresponding conversion according to complete changes of the wind resistance interference relative to the inherent wind resistance.

Based on a wind velocity measurement result, in some embodiments, still referring to FIG. 6, the wind velocity measurement method further includes the following step:

603: Calculating a wind direction according to wind velocity components of the wind velocity of the flight environment of the UAV in a direction x and a direction y.

the direction x and the direction y are two directions perpendicular to each other located in a plane where the UAV is located. A process of calculating the wind direction according to the wind velocity components is completed by using the following formula (6):

$$\beta = \psi + \arctan2(-V_{wx}, -V_{wy}) \qquad (6).$$

$\psi$ is a yaw angle of a UAV. $\beta$ is the wind direction. $V_{wx}$ is the wind velocity component in the direction x. $V_{wy}$ is the wind velocity component in the direction y.

In some embodiments, a system identification model used for the system identification is a current equivalent wind resistance coefficient of the UAV (construction of the system identification model is an offline construction process). During the system identification, the equivalent wind resistance coefficient corresponding to current flight data and the attribute data of the UAV is solved by using an online identification method.

The equivalent wind resistance coefficient is a mathematical parameter determined by causing all interference to the UAV during motion to be equivalent to the wind interference. The equivalent wind resistance coefficient represents a relationship between a current operating status of the UAV and the wind resistance of the UAV.

Technicians may complete the system identification process by using any suitable online identification method according to actual requirements or a structure of the model. FIG. 7 is a method flowchart of an online identification method according to an embodiment of the present invention. As shown in FIG. 7, the online identification method includes the following steps:

701: Discretizing the system identification model to form a corresponding discrete equation.

Since a mathematical model is generally expressed by using an equation set, values thereof changing with time are always continuous. Therefore, if a device such as a computer is required to resolve a status equation of a continuous-time system, the status equation is first required to be converted to a discrete equation.

702: Recursively calculating an equivalent wind resistance of the UAV according to a preset initial value, a current attitude angle, a current flight velocity and a current acceleration of the UAV.

Recursive calculation is frequently used in a mathematical operation. By means of a plurality of recursive calculations, a target result can be obtained when an initial value and a recurrence relationship between two items are known.

The equivalent wind resistance means a sum of all resistance of the UAV receives during a flight estimated by means of the system identification. Since resistance of the UAV mainly comes from wind, the resistance all may be equivalent to wind resistance.

703: Converting the equivalent wind resistance to an equivalent wind resistance coefficient according to a current windward area of the UAV and an air density.

As recorded in the above embodiment, the equivalent wind resistance coefficient is a mathematical parameter related to the wind resistance. Therefore, the equivalent wind resistance coefficient may be determined by means of proper conversion when corresponding flight data and attribute data of the UAV are known.

The windward area is calculated by using the current attitude angle of the UAV and the nonlinear function used to calculate the windward area. The air density is calculated by using a current flight altitude of the UAV.

A specific solution process of the to-be-identified parameter (that is, the equivalent wind resistance coefficient) is described below in detail by using the system identification equation shown in the formula (1) as an example:

$$\dot{x} = u + cx^2 + w \qquad (7).$$

According to the different direction x or direction y to be calculated, $x = V_x$ or $V_y$, $u = \dfrac{-T\sin\theta}{m}$ or $\dfrac{T\sin\phi\cos\theta}{m}$, $c = -0.5C_x\rho S_{fb}$ or $-0.5C_y\rho S_{rl}$ and $w = w_x$ or $w_y$.

2) A sampling step length is set to T (having a minimum value), k=0,1,2..., which is a positive integer, and T*k=t. Therefore, a dynamic velocity equation $f(t)$ of the UAV changing with time may be written as a discrete equation shown in the following formula (8):

$$x(k+1) - x(k) - Tu(k) = Tc(k)x^2(k) + Tw(k) \qquad (8).$$

3) Parameters $y(k) = x(k+1) - x(k) - Tu(k)$, $h(k) = Tx^2(k)$ and $v(k) = Tw(k)^2$ are further constructed. Therefore, the formula (7) may be further simplified as a formula (9):

$$y(k) = h(k)c(k) + \upsilon(k) \tag{9}$$

4) A recursive formula shown in the following formula (10) is constructed, and a parameter $c(k)$ is recursively calculated:

$$\begin{cases} c(k) = c(k-1) + \dfrac{P(k-1)h(k)}{1+h^2(k)P(k-1)}(y(k) - h(k)c(k-1)) \\[3mm] P(k) = P(k-1) - \dfrac{h^2(k)P^2(k-1)}{1+h^2(k)P(k-1)} \\[3mm] P(0) = 1 \\[1mm] c(0) = c_0 \end{cases} \tag{10}$$

$P(0)$ and $c(0)$ are initial values, and are set to 1 and $c_0$ respectively in this embodiment. Technicians may alternatively set and use proper values as initial values according to actual requirements to calculate the parameter $c(k)$.

5) Since $c = -0.5C_x\rho S_{fb}$ or $-0.5C_y\rho S_{fl}$, after a value of the parameter $c(k)$ is calculated, the corresponding equivalent wind resistance coefficients $C_x$ and $C_y$ may be calculated according to an air density and a windward area of the UAV at the current time t (that is, T*k).

Adapting to the equivalent wind resistance coefficient, the inherent wind resistance is correspondingly expressed by an inherent wind resistance coefficient of the UAV. In step 602, the wind velocity of the flight environment of the UAV may be specifically calculated by using the formula (5).

In addition to the steps required to be performed online during the operation of the UAV such as real-time detection of the flight data acquired and the online identification, the wind velocity measurement method further includes some offline steps, such as determining an inherent wind resistance coefficient of the UAV in the direction x and an inherent wind resistance coefficient in the direction y, fitting the nonlinear function required to calculate the windward area, and determining the mass of the UAV.

It should be noted that the offline steps do not need to be repeated on each UAV. Instead, the offline steps are recorded in the memory of the UAV after offline experimental calculation is completed. Further, a UAV having a same or similar shape and structure may directly use the existing data to omit one or more of the above offline steps.

The wind velocity measurement method provided in this embodiment of the present invention estimates the current wind resistance interference to the UAV and then calculates the wind velocity of the flight environment by means of the parameter identification process through system identification. The method neither requires an additional wind velocity or wind sensor, nor relies on a huge database. The method requires low implementation costs, has desirable real-time performance, and can be widely applied to UAV systems.

During the flight of the UAV, the flight control system may periodically perform the wind velocity measurement method provided in the embodiments of the present invention according to a set period to obtain an estimated value of a current wind velocity and/or wind direction. The flight velocity of the UAV is mainly affected by the wind interference during flight, and impact caused by other interference is relatively small. Therefore, the estimated value of the wind velocity and/or the wind force calculated under the equivalent premise may be substantially considered as accurate and can substantially satisfy use requirements of warning.

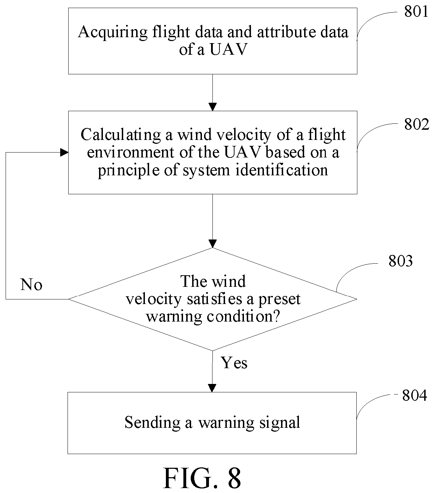

FIG. 8 is a method flowchart of a wind velocity measurement method according to another embodiment of the present invention.

As shown in FIG. 8, the method includes the following steps:

801: Acquiring flight data and attribute data of a UAV.

The flight data and the attribute data that are required to be acquired depend on variables that are required to be inputted for calculating a theoretical flight velocity of the UAV. Those skilled in the art may adjust or change the data information according to an actual requirement, a preference setting or an accuracy requirement.

Specifically, the flight data changes with a motion status of the UAV. The flight data may be calculated from sampling data of a sensor of the UAV by using a data fusion algorithm.

The attribute data is an inherent attribute of the UAV. The attribute data depends on a structure and the like of the UAV, and does not change with the motion status. The flight data may be pre-set and recorded in a memory by means of an experiment and read from the memory when required.

802: Calculating a wind velocity of a flight environment of the UAV based on a principle of system identification.

By periodically performing step 802, the wind velocity of the flight environment of the UAV can be continuously updated to ensure warning in time. A specific update period is an empirical value, and may be adjusted or set according to an actual condition, such as 1 minute or longer.

803: Determining whether the wind velocity satisfies a preset warning condition, if yes, perform step 804 is performed, or if no, return to step 802 to update the wind velocity.

The preset warning condition is a determination standard preset based on experience or an actual condition of the UAV (for example, an ability of the UAV to bear a wind velocity). The preset warning condition may be composed of one or more conditions, and are used to measure a probability of uncontrolled accidents of the UAV. That is to say, when the preset warning condition is satisfied, it indicates that the flight control system of the UAV has substantially reached a design upper limit to resist the wind interference, and is very likely to encounter abnormalities or accidents.

In some embodiments, the warning condition may be a preset alarming threshold. A monitor 132 may continuously detect whether the wind velocity has reached the alarming threshold. When the wind velocity reaches the alarming threshold, a warning signal is sent to the remote control device 20. The alarming threshold is an empirical value, and may be determined or set by technicians by means of experiments or tests according to the specific an operating status of the UAV.

804: Sending a warning signal.

The warning signal may be represented by an identifier of any suitable form or type. For example, a warning mark level is simply represented by using 1 and 0. When a value of the warning mark level is 1, it indicates that a warning signal is sent. When the value of the warning mark level is 0, it indicates that there is no warning signal.

Specifically, in case of the preset alarming threshold, a logic for the monitor 132 to trigger the warning signal may be expressed by the following formula (11):

$$flag = \begin{cases} 1, & if \quad \sqrt{V_{wx}^2 + V_{wy}^2} \geq V_{thr} \\ 0, & if \quad \sqrt{V_{wx}^2 + V_{wy}^2} < V_{thr} \end{cases} \tag{11}.$$

$V_{wx}$ is a wind velocity in a direction x. $V_{wy}$ is a wind velocity in a direction y. *flag* is a value of a mark level of the warning signal. That is to say, when a sum of squares of the wind velocities in the direction x and the direction y is greater than or equal to a square of the preset alarming threshold, the monitor 132 determines that the wind velocity satisfies the preset warning condition and sends a warning signal.

Certainly, the determination logic shown in the formula (11) is merely an example and is not intended to limit the working steps of the monitor 132 to send the warning signal. Those skilled in the art may use, according to actual requirements, a different warning condition to determine whether the UAV bears an excessively large wind velocity and whether the aircraft control system cannot be effectively controlled.

After receiving the warning signal, the remote control device 20 may feed back corresponding warning prompt information to a user by using a display screen or other interaction devices, to prompt the user to stop the flight of the UAV in time and land the UAV at a safe and controllable position.

The specific warning information may be set according to an actual condition. A form of the specific warning information includes but is not limited to text or pictures. For example, words such as "The current wind velocity is excessively large" may be highlighted on a display interface of an RC, or a specific color icon may be used to indicate that the current wind velocity exceeding the limit. Further, a voice prompt may alternatively be broadcast by a speaker.

An existing ordinary UAV cannot provide warnings. As a result, a user/operator fails to perform operations in time and the UAV explodes as a result of an excessively large wind velocity. By applying the wind velocity detection method provided in this embodiment of the present invention to the UAV, the problem that the above problem is effectively resolved. The method can prompt the user to fly carefully or select a safe place for landing when the wind velocity is excessively large.

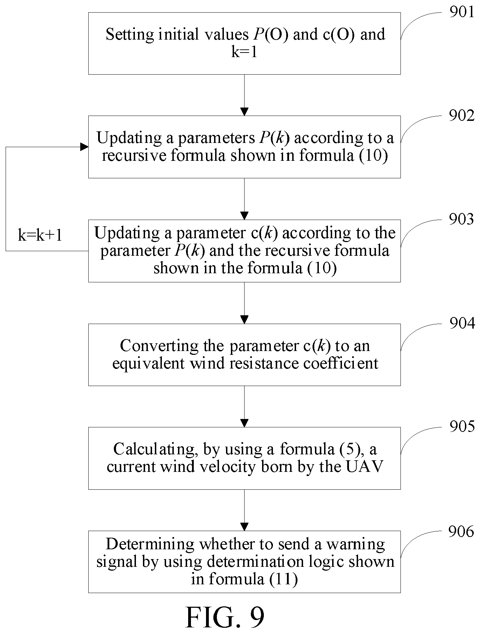

Based on the recursive calculation process disclosed in the embodiments of the present invention, the flight control system may specifically perform the steps shown in FIG. 9 to achieve wind velocity measurement and warning of the UAV without relying on the wind velocity sensor and the database.

In this embodiment, the UAV has one or more fundamental sensors. The sensors can collect at least flight data such as an attitude angle (including a pitch angle, a roll angle and a heading angle), an acceleration and a flight velocity of the UAV in real time.

The direction x and the direction y are two vectors perpendicular to each other in a plane where the UAV is located. The direction x is a direction in which the UAV moves forward and backward, and the direction y is a direction in which the UAV flies leftward and rightward.

In addition, the mass of the UAV, the nonlinear functions $f_{fb}(\theta,\phi)$ and $f_{rl}(\theta,\phi)$ of the windward areas in the directions x and y and the attitude angle, the inherent wind resistance coefficient of the UAV in the direction x and the inherent wind resistance coefficient in the direction y are measured and stored in the memory of the UAV.

The nonlinear functions of the windward areas and the attitude angle and the inherent wind resistance coefficients may be determined by means of least square fitting by using experimental data (for example, a plurality of sets of flight data of the UAV collected during a flight in a windless indoor environment) obtained in an ideal environment.

As shown in FIG. 9, the calculation process performed by the flight control system includes the following steps: 901: Setting initial values $P(0)$ and $c(0)$ and k=1.

It should be noted that the initial values required for the recursive calculation may be set or initialized according to an actual condition. For example, the initial values may all be initialized to 0.

902: Updating a parameter $P(k)$ according to the recursive formula shown in the formula (10).
903: Updating a parameter $c(k)$ according to the parameter $P(k)$ and the recursive formula shown in the formula (10).
904: Converting the parameter $c(k)$ to an equivalent wind resistance coefficient.

A specific conversion method may be determined according to a relationship between the parameter $c(k)$ and the equivalent wind resistance coefficient (that is, $c = -0.5C_x\rho S_{fb}$ or $-0.5C_y\rho S_{rl}$).

905: Calculating, by using the formula (5), a current wind velocity born by the UAV.

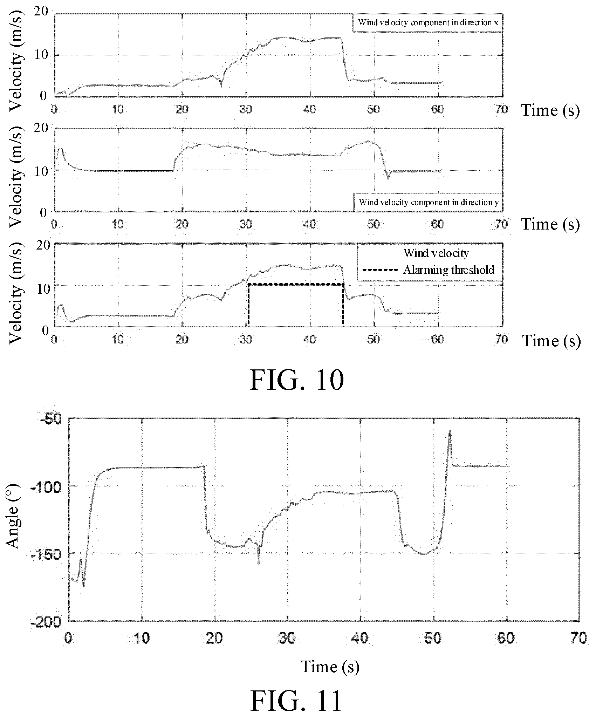

FIG. 10 is a graph showing changes of a wind velocity with time according to an embodiment of the present invention. As shown in FIG. 10, when the system identification model disclosed in the embodiments of the present invention is used, the wind velocity components in the direction x and the direction y may be calculated, and the corresponding two components are combined into the current wind velocity born by the UAV, and a curve of the wind velocity changing with time may be obtained.

906: Determining whether to send a warning signal by using the determination logic shown in the formula (11).

The determination logic is to determine whether a warning signal is required to be sent by using the alarming threshold as a determination condition. Still referring to FIG. 8, the alarming threshold is a preset empirical value. When the wind velocity is higher than the alarming value, an alarming signal is sent. The alarming signal indicates that the wind is currently relatively large and prompts a user or an operator to be careful.

During the flight of the UAV, the wind velocity is required to be updated periodically. During updating of the wind velocity, k=k+1 may be set, and steps 902 and 903 may be performed again to calculate and update the wind velocity of the flight environment of the UAV.

FIG. 11 is a graph of a wind direction changing with time according to an embodiment of the present invention. FIG. 11 shows a corresponding wind direction curve obtained by converting the formula (6) based on the wind velocity curve shown in FIG. 10. A calculated wind direction angle may also be transmitted to the remote control device 20 and displayed to the user by using an interactive device (such as a display screen) of the remote control device 20.

In conclusion, the wind velocity measurement method provided in the embodiments of the present invention and the warning method for a UAV implemented on this basis do not require a wind velocity-related sensor and a huge database. Instead, the wind velocity can be estimated by using algorithms based on the existing information. Therefore, the corresponding wind velocity and/or wind direction can be determined.

Since the wind velocity-related the sensor and the database are not required, the hardware implementation costs of the UAV are effectively reduced, and large database calculations, large memory requirements and large time delays are avoided. In addition, the method has a desirable application prospect.

Finally, it should be noted that: the foregoing embodiments are merely used for describing the technical solutions of the present invention, but are not intended to limit the present invention. Under the ideas of the present invention, the technical features in the foregoing embodiments or different embodiments may also be combined, the steps may be performed in any order, and many other changes of different aspects of the present invention also exists as described above, and these changes are not provided in detail for simplicity. Although the present invention is described in detail with reference to the foregoing embodiments, it should be appreciated by a person skilled in the art that, modifications may still be made to the technical solutions described in the foregoing embodiments, or equivalent replacements may be made to the part of the technical features; and these modifications or replacements will not cause the essence of corresponding technical solutions to depart from the scope of the technical solutions in the embodiments of the present invention. The invention is defined by the appended claims.

**Claims**

1. A wind velocity measurement method performed by an unmanned aerial vehicle, UAV (10), comprising:

determining current wind resistance interference (601) of the UAV (10) by means of system identification based on flight data and attribute data of the UAV (10), wherein the flight data comprises an attitude angle, a flight velocity, an acceleration and a flight altitude of the UAV (10), and the attribute data comprises a mass of the UAV (10), an inherent wind resistance coefficient and a nonlinear function used to calculate a windward area, wherein the windward area is calculated by using the nonlinear function related to a current attitude angle of the UAV (10); and calculating a wind velocity (602) of a flight environment of the UAV (10) according to the wind resistance interference and the inherent wind resistance of the UAV (10).

2. The wind velocity measurement method according to claim 1, wherein the determining current wind resistance interference (601) of a UAV (10) by means of system identification based on flight data and attribute data of the UAV (10) comprises:

    constructing a system identification model of the UAV (10), wherein a to-be-identified parameter of the system identification model is a current equivalent wind resistance coefficient of the UAV (10); and
    solving the corresponding equivalent wind resistance coefficient according to current flight data and the attribute data of the UAV (10) by using an online identification method; and
    the calculating a wind velocity of a flight environment of the UAV (10) according to the wind resistance interference and the inherent wind resistance of the UAV (10) comprises:
    calculating the wind velocity of the flight environment of the UAV (10) according to a difference between the equivalent wind resistance coefficient and the inherent wind resistance coefficient of the UAV (10).

3. The wind velocity measurement method according to claim 2, wherein solving the corresponding equivalent wind resistance coefficient according to current flight data and the attribute data of the UAV (10) by using an online identification method comprises:

    discretizing the system identification model (701) to form a corresponding discrete equation;
    recursively calculating an equivalent wind resistance (702) of the UAV (10) according to a preset initial value, the current attitude angle, a current flight velocity and a current acceleration of the UAV (10); and
    converting the equivalent wind resistance (703) to an equivalent wind resistance coefficient according to a current windward area of the UAV (10) and an air density, wherein
    the air density is calculated by using a current flight altitude of the UAV (10).

4. The wind velocity measurement method according to claim 2, wherein the equivalent wind resistance coefficient is represented by an equivalent wind resistance coefficient component in a direction x and an equivalent wind resistance coefficient component in a direction y, and the wind velocity is represented by a wind velocity component in the direction x and a wind velocity component in the direction y, wherein the direction x and the direction y are perpendicular to each other and are on a same plane as the UAV (10).

5. The wind velocity measurement method according to claim 4, wherein calculating the wind velocity of the flight environment of the UAV (10) according to a difference between the equivalent wind resistance coefficient and the inherent wind resistance coefficient of the UAV (10) specifically comprises:

    calculating the wind velocity of the flight environment of the UAV (10) by using the following formula:

$$\begin{cases} V_{wx} = (C_x - C_{dx})0.5\rho V_x^2 S_{fb} \\ V_{wy} = (C_y - C_{dy})0.5\rho V_y^2 S_{rl} \end{cases}$$

    wherein $V_{wx}$ is a wind velocity component of the wind velocity of the flight environment of the UAV (10) in a direction x, $V_{wy}$ is a wind velocity component of the wind velocity of the flight environment of the UAV (10) in a direction y, $V_x$ is a velocity of the UAV (10) in the direction x, $V_y$ is a velocity of the UAV (10) in the direction y, $P$ is an air density at a flight altitude, $S_{fb}$ is a windward area of the UAV (10) during a flight in the direction x, $S_{rl}$ is a windward area of the UAV (10) during a flight in the direction y, $C_x$ is an equivalent wind resistance coefficient component in the direction x, $C_y$ is an equivalent wind resistance coefficient component in the direction y, $C_{dx}$ is an inherent wind resistance coefficient of the UAV (10) in the direction x, and $C_{dy}$ is an inherent wind resistance coefficient of the UAV (10) in the direction y.

6. The wind velocity measurement method according to claim 5, wherein the inherent wind resistance coefficient of the UAV (10) in the direction x and the inherent wind resistance coefficient in the direction y are determined by means of least square fitting according to flight data of the UAV (10) in a windless room.

7. The wind velocity measurement method according to claim 4, wherein the system identification model is represented by the following formula:

$$\begin{cases} \dot{V}_x = \dfrac{1}{m}(-T\sin\theta - C_x \cdot 0.5\rho V_x^2 S_{fb} + w_x) \\ \dot{V}_y = \dfrac{1}{m}(T\sin\phi\cos\theta - C_y \cdot 0.5\rho V_y^2 S_{rl} + w_y) \end{cases}$$

wherein $\dot{V}_x$ is an acceleration of the UAV (10) in the direction x, $\dot{V}_y$ is an acceleration of the UAV (10) in the direction y, $V_x$ is a velocity of the UAV (10) in the direction x, $V_y$ is a velocity of the UAV (10) in the direction y, T is propeller tension, $\theta$ is a pitch angle, $\phi$ is a roll angle, $\rho$ is an air density at a flight altitude, $S_{fb}$ is a windward area of the UAV (10) during a flight in the direction x, $S_{rl}$ is a windward area of the UAV (10) during a flight in the direction y, $C_x$ is the equivalent wind resistance coefficient component in the direction x, $C_y$ is the equivalent wind resistance coefficient component in the direction y, m is the mass of the UAV (10), $w_x$ is a model uncertainty in the direction x, and $w_y$ is a model uncertainty in the direction y.

8. The wind velocity measurement method according to claim 5 or 7, wherein the windward area is calculated by using the following formula:

$$S_{fb} = S_{fb0}(1 + f_{fb}(\theta,\phi))$$

$$S_{rl} = S_{rl0}(1 + f_{rl}(\theta,\phi))$$

wherein $S_{fb}$ is a windward area of the UAV (10) during a flight in the direction x, $S_{rl}$ is a windward area of the UAV (10) during a flight in the direction y, $S_{fb0}$ is a windward area of the UAV (10) during the flight in the direction x at an attitude angle of 0, $S_{rl0}$ is a windward area of the UAV (10) during the flight in the direction y at an attitude angle of 0, $f_{fb}(\theta,\phi)$ and $f_{rl}(\theta,\phi)$ are nonlinear functions, $\theta$ is a pitch angle, and $\phi$ is a roll angle.

9. The wind velocity measurement method according to claim 7, wherein the propeller tension is calculated by using the following formula:

$$T = -m(a_z + \frac{g}{\cos\theta\cos\phi})$$

wherein $a_z$ is an acceleration of the UAV (10) in a direction z, and $g$ is an acceleration of gravity, the direction z is perpendicular to a plane formed by the direction x and the direction y, $\theta$ is a pitch angle, $\phi$ is a roll angle, and m is the mass of the UAV (10).

10. The wind velocity measurement method according to claim 7, further comprising:

calculating a wind direction (603) according to the wind velocity components in the direction x and the direction y by using the following formula:

$$\beta = \psi + \arctan2(-V_{wx}, -V_{wy})$$

wherein $\psi$ is a yaw angle of the UAV (10), $\beta$ is the wind direction, $V_{wx}$ is the wind velocity component in the direction x, and $V_{wy}$ is the wind velocity component in the direction y.

11. The wind velocity measurement method according to any one of claims 1 to 10, further comprising:
sending a warning signal (804) when the wind velocity of the flight environment of the UAV (10) satisfies a preset warning condition.

12. The wind velocity measurement method according to claim 11, wherein sending a warning signal (804) when the wind velocity of the flight environment of the UAV (10) satisfies a preset warning condition comprises:

determining whether the preset warning condition is satisfied by means of calculation by using the following formula:

$$\sqrt{V_{wx}^{2} + V_{wy}^{2}} \geq V_{thr}$$

wherein $V_{wx}$ is the wind velocity component in the direction x, $V_{wy}$ is the wind velocity component in the direction y, and $V_{thr}$ is a safe wind velocity threshold;
sending the warning signal when the preset warning condition is satisfied; and
keeping detecting the wind velocity of the flight environment of the UAV (10) when the preset warning condition is not satisfied.

13. An unmanned aerial vehicle, UAV (10), comprising: a fuselage body and a plurality of sensors (11), a memory (12) and a flight control system (13) disposed on the fuselage body, wherein the memory (12) stores a computer executable program instruction, the computer executable program instruction, when called by the flight control system (13), causes the flight control system (13) to acquire flight data from the sensors (11), acquire attribute data from the memory (12), and perform the wind velocity measurement method according to any one of claims 1 to 12.

14. The UAV (10) according to claim 13, wherein the flight control system (13) is further configured to convert a wind velocity of a flight environment of the UAV (10) to a wind direction, and display the wind velocity and the wind direction on a remote control device (20) corresponding to the UAV (10).

**Patentansprüche**

1. Windgeschwindigkeitsmessverfahren, das von einem unbemannten Luftfahrzeug, *unmanned aerial vehicle* - UAV (10), durchgeführt wird, umfassend:

Bestimmen der aktuellen Windwiderstandsbeeinträchtigung (601) des UAV (10) mittels Systemidentifizierung auf der Grundlage von Flugdaten und beschreibenden Daten des UAV (10), wobei die Flugdaten einen Lagewinkel, eine Fluggeschwindigkeit, eine Beschleunigung und eine Flughöhe des UAV (10) umfassen und die beschreibenden Daten ein Gewicht des UAV (10), einen inhärenten Windwiderstandskoeffizienten und eine nichtlineare Funktion zum Berechnen einer dem Wind zugewandten Fläche umfassen, wobei die dem Wind zugewandte Fläche unter Verwendung der nichtlinearen Funktion in Bezug auf einen aktuellen Lagewinkel des UAV (10) berechnet wird; und
Berechnen einer Windgeschwindigkeit (602) einer Flugumgebung des UAV (10) gemäß der Windwiderstandsbeeinträchtigung und dem inhärenten Windwiderstand des UAV (10).

2. Windgeschwindigkeitsmessverfahren nach Anspruch 1, wobei das Bestimmen der aktuellen Windwiderstandsbeeinträchtigung (601) eines UAV (10) mittels Systemidentifizierung auf der Grundlage von Flugdaten und beschreibenden Daten des UAV (10) Folgendes umfasst:

Erstellen eines Systemidentifizierungsmodells des UAV (10), wobei ein festzustellender Parameter des Systemidentifizierungsmodells ein aktueller äquivalenter Windwiderstandskoeffizient des UAV (10) ist; und
Lösen des entsprechenden äquivalenten Windwiderstandskoeffizienten gemäß aktuellen Flugdaten und den beschreibenden Daten des UAV (10) unter Verwendung eines Online-Identifizierungsverfahrens; und
wobei das Berechnen einer Windgeschwindigkeit einer Flugumgebung des UAV (10) gemäß der Windwiderstandsbeeinträchtigung und dem inhärenten Windwiderstand des UAV (10) Folgendes umfasst:
Berechnen der Windgeschwindigkeit der Flugumgebung des UAV (10) gemäß einem Unterschied zwischen dem äquivalenten Windwiderstandskoeffizienten und dem inhärenten Windwiderstandskoeffizienten des UAV (10).

3. Windgeschwindigkeitsmessverfahren nach Anspruch 2, wobei das Lösen des entsprechenden äquivalenten Windwiderstandskoeffizienten gemäß aktuellen Flugdaten und den beschreibenden Daten des UAV (10) unter Verwendung eines Online-Identifizierungsverfahrens Folgendes umfasst:

Diskretisieren des Systemidentifizierungsmodells (701) zum Erstellen einer entsprechenden diskreten Gleichung;

rekursives Berechnen eines äquivalenten Windwiderstands (702) des UAV (10) gemäß einem voreingestellten Ausgangswert, dem aktuellen Lagewinkel, einer aktuellen Fluggeschwindigkeit und einer aktuellen Beschleunigung des UAV (10); und

Umwandeln des äquivalenten Windwiderstands (703) in einen äquivalenten Windwiderstandskoeffizienten gemäß einer aktuellen dem Wind zugewandten Fläche des UAV (10) und einer Luftdichte, wobei die Luftdichte unter Verwendung einer aktuellen Flughöhe des UAV (10) berechnet wird.

4. Windgeschwindigkeitsmessverfahren nach Anspruch 2, wobei der äquivalente Windwiderstandskoeffizient durch eine Komponente des äquivalenten Windwiderstandskoeffizienten in einer Richtung x und eine Komponente des äquivalenten Windwiderstandskoeffizienten in einer Richtung y wiedergegeben ist und die Windgeschwindigkeit durch eine Windgeschwindigkeitskomponente in der Richtung x und eine Windgeschwindigkeitskomponente in der Richtung y wiedergegeben ist, wobei die Richtung x und die Richtung y senkrecht zueinander verlaufen und sich auf derselben Ebene wie das UAV (10) befinden.

5. Windgeschwindigkeitsmessverfahren nach Anspruch 4, wobei das Berechnen der Windgeschwindigkeit der Flugumgebung des UAV (10) gemäß einem Unterschied zwischen dem äquivalenten Windwiderstandskoeffizienten und dem inhärenten Windwiderstandskoeffizienten des UAV (10) insbesondere Folgendes umfasst:

Berechnen der Windgeschwindigkeit der Flugumgebung des UAV (10) unter Verwendung der folgenden Formel:

$$\begin{cases} V_{wx} = (C_x - C_{dx})0.5\rho V_x^2 S_{fb} \\ V_{wy} = (C_y - C_{dy})0.5\rho V_y^2 S_{rl} \end{cases}$$

in der $V_{wx}$ eine Windgeschwindigkeitskomponente der Windgeschwindigkeit der Flugumgebung des UAV (10) in einer Richtung x ist, $V_{wy}$ eine Windgeschwindigkeitskomponente der Windgeschwindigkeit der Flugumgebung des UAV (10) in einer Richtung y ist, $V_x$ eine Geschwindigkeit des UAV (10) in der Richtung x ist, $V_y$, eine Geschwindigkeit des UAV (10) in der Richtung y ist, $\rho$ eine Luftdichte in einer Flughöhe ist, $S_{fb}$ eine dem Wind zugewandte Fläche des UAV (10) während eines Flugs in der Richtung x ist, $S_{rl}$ eine dem Wind zugewandte Fläche des UAV (10) während eines Flugs in der Richtung y ist, $C_x$ eine Komponente des äquivalenten Windwiderstandskoeffizienten in der Richtung x ist, $C_y$ eine Komponente des äquivalenten Windwiderstandskoeffizienten in der Richtung y ist, $C_{dx}$ ein inhärenter Windwiderstandskoeffizient des UAV (10) in der Richtung x ist und $C_{dy}$ ein inhärenter Windwiderstandskoeffizient des UAV (10) in der Richtung y ist.

6. Windgeschwindigkeitsmessverfahren nach Anspruch 5, wobei der inhärente Windwiderstandskoeffizient des UAV (10) in der Richtung x und der inhärente Windwiderstandskoeffizient in der Richtung y mittels der Methode der kleinsten Quadrate gemäß Flugdaten des UAV (10) in einem windstillen Raum bestimmt werden.

7. Windgeschwindigkeitsmessverfahren nach Anspruch 4, wobei das Systemidentifizierungsmodell durch die folgende Formel wiedergegeben ist:

$$\begin{cases} \dot{V}_x = \dfrac{1}{m}(-T\sin\theta - C_x \cdot 0.5\rho V_x^2 S_{fb} + w_x) \\ \dot{V}_y = \dfrac{1}{m}(T\sin\phi\cos\theta - C_y \cdot 0.5\rho V_y^2 S_{rl} + w_y) \end{cases}$$

in der $\dot{V}_x$ eine Beschleunigung des UAV (10) in der Richtung x ist, $\dot{V}_y$ eine Beschleunigung des UAV (10) in der Richtung y ist, $V_x$ eine Geschwindigkeit des UAV (10) in der Richtung x ist, $V_y$ eine Geschwindigkeit des UAV (10) in der Richtung y ist,

T die Propeller-Zugspannung ist, $\theta$ ein Nickwinkel ist, $\phi$ ein Rollwinkel ist, $\rho$ eine Luftdichte bei einer Flughöhe ist, $S_{fb}$ eine dem Wind zugewandte Fläche des UAV (10) während eines Flugs in der Richtung x ist, $S_{rl}$ eine dem Wind zugewandte Fläche des UAV (10) während eines Flugs in der Richtung y ist, $C_x$ die Komponente des äquivalenten Windwiderstandskoeffizienten in der Richtung x ist, $C_y$ die Komponente des äquivalenten Windwiderstandskoeffizienten in der Richtung y ist, m die Masse des UAV (10) ist, $w_x$ eine Modellunsicherheit in der Richtung x ist und $w_y$ eine Modellunsicherheit in der Richtung y ist.

8. Windgeschwindigkeitsmessverfahren nach Anspruch 5 oder 7, wobei die dem Wind zugewandte Fläche unter Verwendung der folgenden Formel berechnet wird:

$$S_{fb} = S_{fb0}(1 + f_{fb}(\theta,\phi))$$

$$S_{rl} = S_{rl0}(1 + f_{rl}(\theta,\phi))$$

in der $S_{fb}$ eine dem Wind zugewandte Fläche des UAV (10) während eines Flugs in der Richtung x ist, $S_{rl}$ eine dem Wind zugewandte Fläche des UAV (10) während eines Flugs in der Richtung y ist, $S_{fb0}$ eine dem Wind zugewandte Fläche des UAV (10) während des Flugs in der Richtung x unter einem Lagewinkel von 0 ist, $S_{rl0}$ eine dem Wind zugewandte Fläche des UAV (10) während des Flugs in der Richtung y unter einem Lagewinkel von 0 ist, $f_{fb}(\theta,\phi)$ und $f_{rl}(\theta,\phi)$ nichtlineare Funktionen sind, $\theta$ ein Nickwinkel ist und $\phi$ ein Rollwinkel ist.

9. Windgeschwindigkeitsmessverfahren nach Anspruch 7, wobei die Propeller-Zugspannung unter Verwendung der folgenden Formel berechnet wird:

$$T = -m(a_z + \frac{g}{\cos\theta\cos\phi})$$

in der $a_z$ eine Beschleunigung des UAV (10) in eine Richtung z ist und $g$ eine Erdbeschleunigung ist, die Richtung z senkrecht zu einer Ebene verläuft, die von der Richtung x und der Richtung y ausgebildet wird, $\theta$ ein Nickwinkel ist, $\phi$ ein Rollwinkel ist und m die Masse des UAV (10) ist.

10. Windgeschwindigkeitsmessverfahren nach Anspruch 7, ferner umfassend:
Berechnen einer Windrichtung (603) gemäß den Windgeschwindigkeitskomponenten in der Richtung x und der Richtung y unter Verwendung der folgenden Formel:

$$\beta = \bar{}\psi + \arctan2(-V_{wx}, -V_{wy})$$

in der $\psi$ ein Gierwinkel des UAV (10) ist, $\beta$ die Windrichtung ist, $V_{wx}$ die Windgeschwindigkeitskomponente in der Richtung x ist und $V_{wy}$ die Windgeschwindigkeitskomponente in der Richtung y ist.

11. Windgeschwindigkeitsmessverfahren nach einem der Ansprüche 1 bis 10, ferner umfassend:
Senden eines Warnsignals (804), wenn die Windgeschwindigkeit der Flugumgebung des UAV (10) eine voreingestellte Warnbedingung erfüllt.

12. Windgeschwindigkeitsmessverfahren nach Anspruch 11, wobei das Senden eines Warnsignals (804), wenn die Windgeschwindigkeit der Flugumgebung des UAV (10) eine voreingestellte Warnbedingung erfüllt, Folgendes umfasst:
Bestimmen, ob die voreingestellte Warnbedingung erfüllt ist, mittels einer Berechnung unter Verwendung der folgenden Formel:

$$\sqrt{V_{wx}^2 + V_{wy}^2} \geq V_{thr}$$

in der $V_{wx}$ die Windgeschwindigkeitskomponente in der Richtung x ist, $V_{wy}$ die Windgeschwindigkeitskomponente in der Richtung y ist und $V_{thr}$ ein sicherer Schwellenwert der Windgeschwindigkeit ist;
Senden des Warnsignals, wenn die voreingestellte Warnbedingung erfüllt ist, und
Fortsetzen des Erfassens der Windgeschwindigkeit der Flugumgebung des UAV (10), wenn die voreingestellte Warnbedingung nicht erfüllt ist.

**13.** Unbemanntes Luftfahrzeug, *unmanned aerial vehicle* - UAV (10), umfassend: einen Rumpfkörper und eine Mehrzahl von Sensoren (11), einen Speicher (12) und ein Flugsteuerungssystem (13), das an dem Rumpfkörper angeordnet ist, wobei der Speicher (12) eine von einem Computer ausführbare Programmanweisung speichert, wobei die von einem Computer ausführbare Programmanweisung bei Abruf durch das Flugsteuerungssystem (13) bewirkt, dass das Flugsteuerungssystem (13) Flugdaten von den Sensoren (11) abruft, beschreibende Daten aus dem Speicher (12) abruft und das Windgeschwindigkeitsmessverfahren nach einem der Ansprüche 1 bis 12 durchführt.

**14.** UAV (10) nach Anspruch 13, wobei das Flugsteuerungssystem (13) ferner dazu ausgestaltet ist, eine Windgeschwindigkeit einer Flugumgebung des UAV (10) in eine Windrichtung umzuwandeln und die Windgeschwindigkeit und die Windrichtung auf einer Fernsteuerungsvorrichtung (20), die dem UAV (10) entspricht, anzuzeigen.

**Revendications**

**1.** Procédé de mesure de vitesse de vent réalisé par un engin volant sans pilote, *unmanned aerial vehicle* - UAV (10), comprenant :

déterminer des interférences actuelles de résistance au vent (601) de l'UAV (10) à l'aide d'une identification de système sur la base de données de vol et de données d'attribut de l'UAV (10), dans lequel les données de vol comprennent un angle d'attitude, une vitesse de vol, une accélération et une altitude de vol de l'UAV (10), et les données d'attribut comprennent une masse de l'UAV (10), un coefficient de résistance inhérente au vent et une fonction non-linéaire utilisée pour calculer une zone au vent, la zone au vent étant calculée en utilisant la fonction non-linéaire relative à un angle d'attitude actuel de l'UAV (10) ; et
calculer une vitesse de vent (602) d'un environnement de vol de l'UAV (10) en fonction des interférences de résistance au vent et de la résistance inhérente au vent de l'UAV (10).

**2.** Procédé de mesure de vitesse de vent selon la revendication 1, dans lequel la détermination des interférences actuelles de résistance au vent (601) d'un UAV (10) à l'aide d'une identification de système sur la base de données de vol et de données d'attribut de l'UAV (10) comprend :

construire un modèle d'identification de système de l'UAV (10), dans lequel un paramètre à identifier du modèle d'identification de système est un coefficient de résistance équivalente actuelle au vent de l'UAV (10) ; et
résoudre le coefficient de résistance équivalente au vent correspondant en fonction de données de vol actuelles et des données d'attribut de l'UAV (10) en utilisant une méthode d'identification en ligne ; et
le calcul d'une vitesse de vent d'un environnement de vol de l'UAV (10) en fonction des interférences de résistance au vent et de la résistance inhérente au vent de l'UAV (10) comprend :
calculer la vitesse de vent de l'environnement de vol de l'UAV (10) en fonction d'une différence entre le coefficient de résistance équivalente au vent et le coefficient de résistance inhérente au vent de l'UAV (10).

**3.** Procédé de mesure de vitesse de vent selon la revendication 2, dans lequel la résolution du coefficient de résistance équivalente au vent correspondant en fonction de données de vol actuelles et des données d'attribut de l'UAV (10) en utilisant une méthode d'identification en ligne comprend :

discrétiser le modèle d'identification de système (701) afin de former une équation discrète correspondante ;
calculer de façon récurrente une résistance équivalente au vent (702) de l'UAV (10) en fonction d'une valeur initiale prédéfinie, de l'angle d'attitude actuel, d'une vitesse de vol actuelle et d'une accélération actuelle de l'UAV (10) ; et
convertir la résistance équivalente au vent (703) en un coefficient de résistance équivalente au vent en fonction d'une zone actuelle au vent de l'UAV (10) et d'une masse volumique de l'air, la masse volumique de l'air étant calculée en utilisant une altitude de vol actuelle de l'UAV (10).

**4.** Procédé de mesure de vitesse de vent selon la revendication 2, dans lequel le coefficient de résistance équivalente au vent est représenté par une composante de coefficient de résistance équivalente au vent dans une direction x et une composante de coefficient de résistance équivalente au vent dans une direction y, et la vitesse de vent est représentée par une composante de vitesse de vent dans la direction x et une composante de vitesse de vent dans la direction y, la direction x et la direction y étant perpendiculaires l'une à l'autre et étant sur un même plan que l'UAV (10).

**5.** Procédé de mesure de vitesse de vent selon la revendication 4, dans lequel le calcul de la vitesse de vent de l'environnement de vol de l'UAV (10) en fonction d'une différence entre le coefficient de résistance équivalente au vent et le coefficient de résistance inhérente au vent de l'UAV (10) comprend spécifiquement :

calculer la vitesse de vent de l'environnement de vol de l'UAV (10) en utilisant la formule suivante :

$$\begin{cases} V_{wx} = (C_x - C_{dx})0.5\rho V_x^2 S_{fb} \\ V_{wy} = (C_y - C_{dy})0.5\rho V_y^2 S_{rl} \end{cases}$$

où $V_{wx}$ est une composante de vitesse de vent de la vitesse de vent de l'environnement de vol de l'UAV (10) dans une direction x, $V_{wy}$ est une composante de vitesse de vent de la vitesse de vent de l'environnement de vol de l'UAV (10) dans une direction y, $V_x$ est une vitesse de l'UAV (10) dans la direction x, $V_y$ est une vitesse de l'UAV (10) dans la direction y, $\rho$ est une masse volumique de l'air à une altitude de vol, $S_{fb}$ est une zone au vent de l'UAV (10) pendant un vol dans la direction x, $S_{rl}$ est une zone au vent de l'UAV (10) pendant un vol dans la direction y, $C_x$ est une composante de coefficient de résistance équivalente au vent dans la direction x, $C_y$ est une composante de coefficient de résistance équivalente au vent dans la direction y, $C_{dx}$ est un coefficient de résistance inhérente au vent de l'UAV (10) dans la direction x, et $C_{dy}$ est un coefficient de résistance inhérente au vent de l'UAV (10) dans la direction y.

6. Procédé de mesure de vitesse de vent selon la revendication 5, dans lequel le coefficient de résistance inhérente au vent de l'UAV (10) dans la direction x et le coefficient de résistance inhérente au vent dans la direction y sont déterminés à l'aide d'un ajustement par les moindres carrés en fonction de données de vol de l'UAV (10) dans une pièce sans vent.

7. Procédé de mesure de vitesse de vent selon la revendication 4, dans lequel le modèle d'identification de système est représenté par la formule suivante :

$$\begin{cases} \dot{V}_x = \dfrac{1}{m}(-T\sin\theta - C_x \cdot 0.5\rho V_x^2 S_{fb} + w_x) \\ \dot{V}_y = \dfrac{1}{m}(T\sin\phi\cos\theta - C_y \cdot 0.5\rho V_y^2 S_{rl} + w_y) \end{cases}$$

où $\dot{V}_x$ est une accélération de l'UAV (10) dans la direction x, $\dot{V}_y$ est une accélération de l'UAV (10) dans la direction y, $V_x$ est une vitesse de l'UAV (10) dans la direction x, $V_y$ est une vitesse de l'UAV (10) dans la direction y, T est la tension de l'hélice, $\theta$ est un angle de tangage, $\phi$ est un angle de roulis, $\rho$ est une masse volumique de l'air à une altitude de vol, $S_{fb}$ est une zone au vent de l'UAV (10) pendant un vol dans la direction x, $S_{rl}$ est une zone au vent de l'UAV (10) pendant un vol dans la direction y, $C_x$ est la composante de coefficient de résistance équivalente au vent dans la direction x, $C_y$ est la composante de coefficient de résistance équivalente au vent dans la direction y, m est la masse de l'UAV (10), $w_x$ est une incertitude de modèle dans la direction x, et $w_y$ est une incertitude de modèle dans la direction y.

8. Procédé de mesure de vitesse de vent selon la revendication 5 ou 7, dans lequel la zone au vent est calculée en utilisant la formule suivante :

$$S_{fb} = S_{fb0}(1 + f_{fb}(\theta,\phi))$$

$$S_{rl} = S_{rl0}(1 + f_{rl}(\theta,\phi))$$

où $S_{fb}$ est une zone au vent de l'UAV (10) pendant un vol dans la direction x, $S_{rl}$ est une zone au vent de l'UAV (10) pendant un vol dans la direction y, $S_{fb0}$ est une zone au vent de l'UAV (10) pendant le vol dans la direction x à un angle d'attitude de 0, $S_{rl0}$ est une zone au vent de l'UAV (10) pendant le vol dans la direction y à un angle d'attitude de 0, $f_{fb}(\theta,\phi)$ et $f_{rl}(\theta,\phi)$ sont des fonctions non-linéaires, $\theta$ est un angle de tangage, et $\phi$ est un angle de roulis.

9. Procédé de mesure de vitesse de vent selon la revendication 7, dans lequel la tension de l'hélice est calculée en utilisant la formule suivante :

$$T = -m\left(a_z + \frac{g}{\cos\theta\cos\phi}\right)$$

où $a_z$ est une accélération de l'UAV (10) dans une direction z, et $g$ est une accélération de gravité, la direction z est perpendiculaire à un plan formé par la direction x et la direction y, $\theta$ est un angle de tangage, $\phi$ est un angle de roulis, et m est la masse de l'UAV (10).

10. Procédé de mesure de vitesse de vent selon la revendication 7, comprenant en outre :

calculer une direction de vent (603) en fonction des composantes de vitesse de vent dans la direction x et la direction y en utilisant la formule suivante :

$$\beta = \bar{\psi} + \arctan2(-V_{wx}, -V_{wy})$$

où $\psi$ est un angle de lacet de l'UAV (10), $\beta$ est la direction de vent, $V_{wx}$ est la composante de vitesse de vent dans la direction x, et $V_{wy}$ est la composante de vitesse de vent dans la direction y.

11. Procédé de mesure de vitesse de vent selon l'une quelconque des revendications 1 à 10, comprenant en outre : envoyer un d'avertissement (804) lorsque la vitesse de vent de l'environnement de vol de l'UAV (10) remplit une condition d'avertissement prédéfinie.

12. Procédé de mesure de vitesse de vent selon la revendication 11, dans lequel l'envoi d'un signal d'avertissement (804) lorsque la vitesse de vent de l'environnement de vol de l'UAV (10) remplit une condition d'avertissement prédéfinie comprend :

déterminer si oui ou non la condition d'avertissement prédéfinie est remplie à l'aide d'un calcul en utilisant la formule suivante :

$$\sqrt{V_{wx}^2 + V_{wy}^2} \geq V_{thr}$$

où $V_{wx}$ est la composante de vitesse de vent dans la direction x, $V_{wy}$ est la composante de vitesse de vent dans la direction y, et $Vt_{hr}$ est un seuil de vitesse de vent de sécurité ;
envoyer le signal d'avertissement lorsque la condition d'avertissement prédéfinie est remplie ; et
continuer à détecter la vitesse de vent de l'environnement de vol de l'UAV (10) lorsque la condition d'avertissement prédéfinie n'est pas remplie.

13. Engin volant sans pilote, *unmanned aerial vehicle* - UAV (10), comprenant : un corps de fuselage et une pluralité de capteurs (11), une mémoire (12) et un système de commande de vol (13) disposé sur le corps de fuselage, dans lequel la mémoire (12) stocke une instruction de programme exécutable par ordinateur, l'instruction de programme exécutable par ordinateur, lorsqu'elle est appelée par le système de commande de vol (13), amène le système de commande de vol (13) à acquérir des données de vol à partir des capteurs (11), acquérir des données d'attribut à partir de la mémoire (12) et réaliser le procédé de mesure de vitesse de vent selon l'une quelconque des revendications 1 à 12.

14. UAV (10) selon la revendication 13, dans lequel le système de commande de vol (13) est en outre configuré pour convertir une vitesse de vent d'un environnement de vol de l'UAV (10) en une direction de vent, et afficher la vitesse de vent et la direction de vent sur un dispositif de commande à distance (20) correspondant à UAV (10).

FIG. 1

FIG. 2

FIG. 3

FIG. 4

FIG. 5

Determining current wind resistance interference of a UAV by means of system identification based on flight data and attribute data of the UAV
                                                                    601

Calculating a wind velocity of a flight environment of the UAV according to the wind resistance interference and inherent wind resistance of the UAV
                                                                    602

Calculating a wind direction according to wind velocity components of the wind velocity of the flight environment of the UAV in a direction x and a direction y
                                                                    603

## FIG. 6

Discretizing a system identification model to form a corresponding discrete equation
                                                                    701

Recursively calculating an equivalent wind resistance of the UAV according to a preset initial value, a current attitude angle, a current flight velocity, and a current acceleration of the UAV
                                                                    702

Converting the equivalent wind resistance to an equivalent wind resistance coefficient according to a current windward area and an air density of the UAV
                                                                    703

## FIG. 7

Acquiring flight data and attribute data of a UAV ⟋ 801

Calculating a wind velocity of a flight environment of the UAV based on a principle of system identification ⟋ 802

The wind velocity satisfies a preset warning condition? ⟋ 803

No

Yes

Sending a warning signal ⟋ 804

## FIG. 8

Setting initial values $P(O)$ and c(O) and k=1 — 901

Updating a parameters $P(k)$ according to a recursive formula shown in formula (10) — 902

k=k+1

Updating a parameter c($k$) according to the parameter $P(k)$ and the recursive formula shown in the formula (10) — 903

Converting the parameter c($k$) to an equivalent wind resistance coefficient — 904

Calculating, by using a formula (5), a current wind velocity born by the UAV — 905

Determining whether to send a warning signal by using determination logic shown in formula (11) — 906

FIG. 9

FIG. 10

FIG. 11

**EP 4 006 683 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2390670 A2

- WO 2019061083 A1

**Non-patent literature cited in the description**

- Wind Estimation Method with an Unmanned Rotorcraft for Environmental Monitoring Tasks. *Sensors*, 19 December 2018, vol. 18 (12), 4504

- Adaptive Path Planning for Unmanned Aircraft Using Inflight Wind Velocity Estimation. INTERNATIONAL CONFERENCE ON UNMANNED AIRCRAFT SYSTEMS (ICUAS). IEEE, 12 June 2018, 483-492

30